(19) **Europäisches Patentamt European Patent Office Office européen des brevets**

(11) **EP 4 672 169 B1**

(12) **EUROPEAN PATENT SPECIFICATION**

(45) Date of publication and mention
of the grant of the patent:
**13.05.2026 Bulletin 2026/20**

(21) Application number: **24791266.0**

(22) Date of filing: **26.09.2024**

(51) International Patent Classification (IPC):
**G06V 10/26** *(2022.01)* **G06V 10/774** *(2022.01)*
**G06V 10/82** *(2022.01)*

(52) Cooperative Patent Classification (CPC):
**G06V 10/82; G06V 10/26; G06V 10/774**

(86) International application number:
**PCT/CN2024/121342**

(87) International publication number:
**WO 2025/236517 (20.11.2025 Gazette 2025/47)**

(54) **MATERIAL SEGMENTATION METHOD AND SYSTEM FOR BUILDING COLLAPSE SCENE**

MATERIALSEGMENTIERUNGSVERFAHREN UND SYSTEM ZUM AUFBAU VON
KOLLAPSZENARIEN

PROCÉDÉ ET SYSTÈME DE SEGMENTATION DE MATÉRIAUX POUR UNE SCÈNE
D'EFFONDREMENT DE BÂTIMENT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **15.05.2024 CN 202410607227**

(43) Date of publication of application:
**31.12.2025 Bulletin 2026/01**

(73) Proprietors:
• **Jiangsu XCMG Construction Machinery
Research Institute Ltd.**
**Xuzhou, Jiangsu 221004 (CN)**
• **JIANGSU XCMG STATE KEY LABORATORY
TECHNOLOGY
CO., LTD.**
**Xuzhou Jiangsu 221004 (CN)**

(72) Inventors:
• **LIANG, Kang**
**Xuzhou, Jiangsu 221004 (CN)**
• **KONG, Yanan**
**Xuzhou, Jiangsu 221004 (CN)**
• **MA, Houxue**
**Xuzhou, Jiangsu 221004 (CN)**

(74) Representative: **Bayramoglu et al.
Mira Office
Kanuni Sultan Süleyman Boulevard 5387
Street Beytepe, floor 12, no:50
06800 Cankaya, Ankara (TR)**

(56) References cited:
**CN-A- 114 581 771    CN-A- 115 908 797
CN-A- 116 597 303    CN-A- 117 058 167
CN-A- 118 587 433    US-A1- 2023 082 899**

• **LIANG YUPENG ET AL: "Multimodal Material
Segmentation", 2022 IEEE/CVF CONFERENCE
ON COMPUTER VISION AND PATTERN
RECOGNITION (CVPR), IEEE, 18 June 2022
(2022-06-18), pages 19768 - 19776, XP034193691,
DOI: 10.1109/CVPR52688.2022.01918**
• **BANG SEONGDEOK ET AL: "Image
augmentation to improve construction resource
detection using generative adversarial networks,
cut-and-paste, and image transformation
techniques", AUTOMATION IN CONSTRUCTION,
ELSEVIER, AMSTERDAM, NL, vol. 115, 24 March
2020 (2020-03-24), XP086151601, ISSN:
0926-5805, [retrieved on 20200324], DOI: 10.1016/
J.AUTCON.2020.103198**

EP 4 672 169 B1

- **ZHANG JIAXIN ET AL: "Automatic generation of synthetic datasets from a city digital twin for use in the instance segmentation of building facades", JOURNAL OF COMPUTATIONAL DESIGN AND ENGINEERING, vol. 9, no. 5, 26 August 2022 (2022-08-26), pages 1737 - 1755, XP093327872, ISSN: 2288-5048, DOI: 10.1093/jcde/qwac086**

**Description**

TECHNICAL FIELD

The invention belongs to the technical field of demolition machinery, and relates to a material segmentation method and system for building collapse scenarios.

BACKGROUND

During demolition operations by demolition machinery, different drill bits are used according to the material of the object being worked on, and working parameters need to be adjusted accordingly. Currently, most demolition machinery is operated via manual remote control, which largely relies on human judgment and requires long-term supervision. In scenarios where the materials are diverse and frequent changes of drill bits and adjustment of parameters are needed, such as in building demolition, the automation level of demolition machinery is significantly limited, making it impossible to realize fully intelligent automatic control.

With the further improvement of technologies such as artificial intelligence, computer vision, and deep learning algorithms, the intelligent and automated operation of demolition machinery becomes an essential trend.

Thus, there is a need for a material segmentation method and system that is suitable for demolition machinery and tailored for building collapse scenarios.

Liang Yupeng et al ("Multimodal Material Segmentation", 2022 IEEE/CVF Conference On Computer Vision And Pattern Recognition (CVPR), IEEE, 18 June 2022) disclose a new dataset and novel method for multimodal material segmentation. The new MCubeS dataset consists of 500 sets of RGB, polarization, and NIR images of outdoor scenes captured from a vantage point similar to a car. Bang Seongdeok et al ("Image Augmentation To Improve Construction Resource Detection Using Generative Adversarial Networks, Cut-And-Paste, And Image Transformation Techniques", Automation In Construction, Elsevier, Amsterdam, NL, 24 March 2020) disclose an image augmentation method to construct a large-size dataset for improving construction resource detection. The method consists of three techniques: removing-and-inpainting, cut-and-paste, and image-variation. The removing-and-inpainting technique arbitrarily removes objects from images and re-constructs the removed regions via generative adversarial networks (GAN). The cut-and-paste technique extracts objects from the original dataset and places them into the reconstructed images via the previous technique. The image-variation technique applies three image transformation techniques, intensity-, blur- and scale-variation, to the images. Zhang Jiaxin et al ("Automatic generation of synthetic datasets from a city digital twin for use in the instance segmentation of building facades", Journal of Computational Design and Engineering, 26 August 2022) discloses a system that can auto-generate synthetic datasets from a CDT for the instance segmentation of building facades. The system can produce synthetic images of street views from multiple viewpoints under different atmospheric effects and also generate pixel-level instance annotation for synthetic building facades.

SUMMARY

To address the difficulties in sample labeling and the weak scenario adaptability encountered in material area segmentation using deep learning technology, the invention constructs samples from building collapse scenarios and employs the model domain adaptive learning method to improve the efficiency of model construction and the accuracy of material segmentation, effectively improving the precision and efficiency of demolition operations. This technology can be widely applied in fields such as mining, tunneling, building demolition, cement industry, and rescue operations, ensuring the safety of personnel in harsh working environments and significantly increasing work efficiency.

Objective: To overcome the shortcomings in the prior art, the invention provides a material segmentation method and system for building collapse scenarios, involving the control of an electric rotary system on both horizontal and inclined surfaces.

Technical Scheme: In order to solve the above technical problems, the technical scheme adopted by the invention is as follows.

In a first aspect, a material segmentation method for building collapse scenarios is provided as defined by the appended independent claim 1.

In some embodiments, performing domain adaptive learning on the basic building collapse scenario material segmentation model using labeled images in target scenario sequence images comprises:

selecting typical images from the target scenario sequence images for labeling and data enhancement to obtain a prototype image; according to the prototype image, retrieving images with similar scenario structures from the building collapse scenario material data set to form a domain migration training set;

performing fine-tuning training on the basic building collapse scenario material segmentation model using the domain migration training set to obtain an advanced model; and

iteratively executing loop steps until a preset condition is met, to obtain the trained building collapse scenario material segmentation model, the loop steps comprising: processing the target scenario sequence images using the advanced model to obtain a labeled target scenario image; retrieving images with similar scenario structures from the building collapse scenario material data set according to the target scenario image to obtain an updated domain migration training set; and performing fine-tuning training on the advanced model using the updated domain migration training set to obtain an updated advanced model.

Further, in some embodiments, the preset condition is to iteratively execute the loop steps 3 to 5 times.

In some embodiments, adding collapsed area material objects and corresponding material labels to an image of the building scenario material data set to obtain a building collapse scenario material data set comprises:

constructing a collapsed area on the image of the building scenario material data set, the collapsed area referring to parts that remain upright following a natural collapse or human demolition of a building;

using a texture data set to paste irregular texture block images on a building area where an image of a collapsed area is constructed, the texture block image comprising at least one of bricks, rubble, adobe, steel bars and window frames; and

using a COCO data set to randomly superimpose material objects on remaining parts of the building, simulating internal objects that are revealed after the collapse of external walls of the building.

Further, in some embodiments, constructing a collapsed area on the image of the building scenario material data set comprises:

acquiring a building bounding rectangle of the image of the building scenario material data set, selecting a point from any two of left, top, and right sides of the building bounding rectangle to form a connecting line or a broken line, simulating a projection line of a cross-section on the image, and setting an area defined by the connecting line or the broken line and three sides of the building bounding rectangle to be white or sky blue to simulate a building cut in the building scenario;
alternatively, starting from an upper edge of a building image area, randomly using structural elements of different sizes and shapes to perform morphological erosion on continuous edge points of the building image area, and replacing eroded areas with an average pixel value of a surrounding area of the building.

Further, in some embodiments, the data enhancement comprises: performing at least one of cropping, flipping, translating and brightness and color transformation on the typical image; and
adding collapsed area material objects and corresponding material labels to the typical image: obtaining images of partially collapsed buildings using truncation and erosion operations, then superimposing texture block images and material objects.

In some embodiments, retrieving images with similar scenario structures from the building collapse scenario material data set comprises:

calculating mIoU of a labeled image of the prototype image/target scenario image and a labeled image of each picture in the building collapse scenario material data set, mIoU being a mean intersection over union for each material category; and
taking the top 1% of images from the building collapse scenario material data set with maximum mIoU values as the images with similar scenario structures.

In a second aspect, a material segmentation system for building collapse scenarios is provided as defined by the appended independent claim 8.

In a third aspect, a demolition machine is provided, comprising the material segmentation system for building collapse scenarios.

Beneficial Effects: The material segmentation method and system for building collapse scenarios provided by the invention improve the efficiency of model construction and the accuracy of material segmentation by constructing samples from building collapse scenarios and employing the model domain adaptive learning method, effectively improving the precision and efficiency of demolition operations. This technology can be widely applied in fields such as mining, tunneling, building demolition, cement industry, and rescue operations, ensuring the safety of personnel in harsh working environments and significantly increasing work efficiency. The invention has the following advantages.

(1) High efficiency in training samples and model construction

The model construction method designed by the invention does not require the collection of a large number of building collapse scenario images or manual pixel-level material category labeling for each image. Instead, it directly obtains a substantial number of building collapse scenario material segmentation sample images with direct material labels from existing publicly available road scenario data sets (which include a small amount of material data sets and a large amount of semantic segmentation data). This allows for the efficient construction and training of a building collapse scenario material segmentation model, which can be quickly applied to robotic rescue, demolition, and excavation tasks.

(2) High material recognition accuracy

The training sample generation method designed by the invention can produce diverse and precise material labeled images, which improves the material recognition capability of the model to some extent. On one hand, the generated training data are highly abundant, providing good coverage for the randomness of collapsed areas, making it suitable for selecting semantic segmentation models that perform well but have a large number of parameters. On the other hand, the generated training data maintain a relatively balanced representation of various materials compared to actual data, thus avoiding the heavy-tail problem where the model neglects categories that appear less frequently. These factors effectively ensure superior material recognition performance.

(3) Excellent scenario adaptability

The domain adaptive method for the building scenario material segmentation model is designed to achieve rapid adaptive adjustment of model parameters using only a small number of collected and labeled actual scenario images, thus meeting the demands for switching operational scenarios of demolition machinery in different working environments.

BRIEF DESCRIPTION OF THE DRAWINGS

Fig. 1 is a diagram of a manually labeled building collapse scenario image material area in the prior art;

Fig. 2 is a flowchart of a material segmentation method for building collapse scenarios according to an embodiment of the invention;

Fig. 3 is a schematic diagram illustrating the mapping from a road scenario material data set to a building scenario material data set using perspective projection transformation in an embodiment of the invention;

Fig. 4 is a schematic diagram of some training images generated for material segmentation in building collapse scenarios in an embodiment of the invention; and

Fig. 5 is a schematic diagram of domain adaptation for building collapse test scenarios in an embodiment of the invention.

DETAILED DESCRIPTION OF THE EMBODIMENTS

The invention will be further explained with specific embodiments.

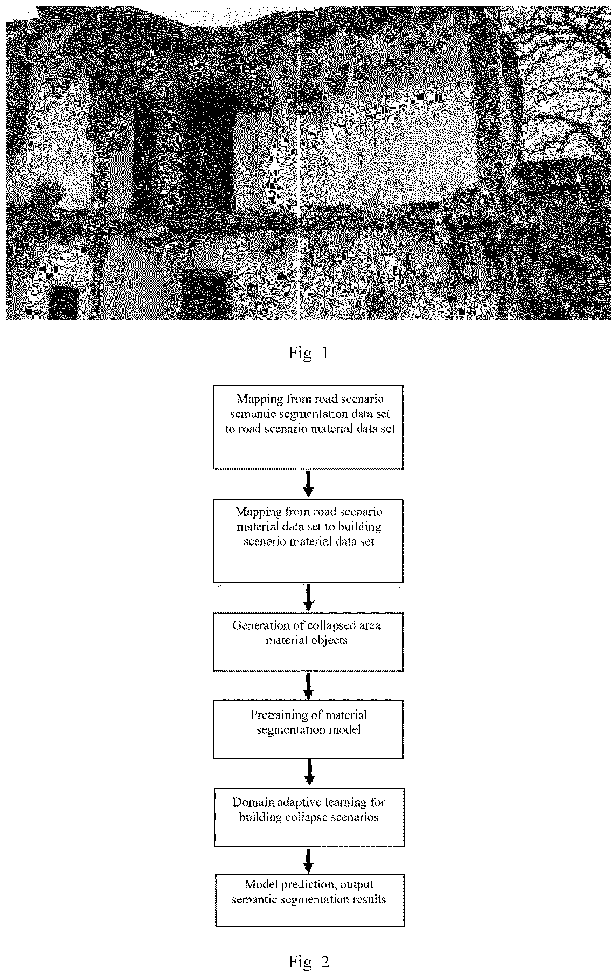

It is well known that obtaining a sufficient amount of labeled training data is the key to training deep material segmentation models. For the deep material segmentation issue in building collapse scenarios, it is also necessary to collect a sufficient amount of image data, and to construct a training set, each pixel in every image must be assigned a material category. This labeling work is time-consuming and labor-intensive. Even with a significant investment in manual labeling, the results still face the following issues (as shown in Fig. 1).

(1) Missing labels: Potential material categories of objects, such as steel bars and metal window frames, are not labeled due to their fine details, which makes them time-consuming to label; often, people choose not to label them.

(2) Ambiguity in material categories: The material categories of objects are visually indistinct, meaning that even when labeled, there may be inconsistencies in the labeled categories.

(3) Rough boundaries of material areas: The boundaries of material areas are often rough, making it difficult to distinguish between different material areas, leading to under-labeling or over-labeling of some material areas.

In view of this, a labeled material segmentation data set is analyzed to identify images with common problems based on the issues mentioned above. These images are then subjected to manual cleaning and correction. For example, as shown in Fig. 1, exposed steel bars in the concrete of demolished building walls and floors were not segmented as metal during the manual labeling process. This was primarily due to the thinness of the steel bars, which is similar to utility poles in road scenarios, making them challenging to label. Furthermore, there are ambiguous cases regarding the need for labeling, such as small stones in cement or dirt roads, which do not belong to the reinforced concrete or brick categories.

Further, the primary metric for material segmentation performance is the mean intersection over union (mIoU), which is one of the most commonly used indicators for assessing the image semantic segmentation performance. It considers both the accuracy of semantic recognition (if the recognition is incorrect, the mIoU will directly decrease) and the precision of segmentation under the premise of ensuring accuracy (both under-segmentation and over-segmentation can lower the mIoU). Additionally, since mIoU is the average IoU across all categories, it imposes a requirement for accuracy on each category, preventing improvements in IoU performance for one category from negatively impacting the IoUs of other categories.

To improve mIoU, it is essential to first ensure that the recognition of categories in each semantic region is accurate, and second, that the segmentation of semantic regions is also precise. For material classification, the model must possess a high learning capability; in addition to having an exceptional category recognition ability, it must also adequately avoid learning any category imbalance biases present in segmentation masks from the training set. Only then can mIoU potentially be improved. Regarding segmentation, if the boundary labeling of semantic regions is done carelessly during manual labeling, the resulting model will inevitably be random, leading to low segmentation accuracy and consequently a low mIoU. Therefore, it is crucial for the labeled samples to be as accurate as possible.

In light of the above issues, the invention provides a material segmentation method for building collapse scenarios, utilizing a semi-automated training sample generation method. This approach not only improves the efficiency of material segmentation labeling, resulting in a more balanced representation of material categories in the labeled samples, but also offers a domain adaptation method for a deep material segmentation model, collectively ensuring superior mIoU performance of the material segmentation model. The method comprises:

1. Generation of training samples for building collapse scenarios: To effectively reduce the workload of pixel-level material category labeling in material segmentation, training sample images and labels thereof are generated using publicly available data sets. First, a robust road scenario material segmentation model is trained using a public road scenario material data set, allowing for the acquisition of more material segmentation results to augment the road scenario material data set. Images of buildings on either side of the road scenario are obtained from a frontal perspective via inverse perspective transformation. Various material objects are then randomly overlaid on these building images to simulate collapsed areas.

2. Training of a basic material segmentation model with the generated training samples.

3. Domain adaptation method for building scenarios: The deep material segmentation model trained on the simulated training samples (referred to as the basic material segmentation model) possesses fundamental material recognition capabilities. However, for specific practical applications, a domain adaptation method is required for further adaptation. First, a sequence of scenario images is captured, and several images are labeled. The model can then use the captured scenario sequence and the labeled images, along with the basic material segmentation model, to automatically achieve domain adaptation.

Embodiment 1: A material segmentation method for building collapse scenarios provided in this embodiment comprises:

acquiring a target building collapse scenario image to be segmented; and

inputting the target building collapse scenario image to be segmented into a trained building collapse scenario material segmentation model to obtain a material segmentation result;

wherein the acquisition of the trained building collapse scenario material segmentation model comprises:

training a first deep semantic segmentation model using a first road scenario material data set to obtain a road scenario material segmentation model, the first road scenario material data set comprising a plurality of road scenario material segmentation images and corresponding material labels;

processing a road scenario semantic segmentation data set using the road scenario material segmentation model to obtain a labeled road scenario material segmentation image; adding the labeled road scenario material segmentation image into the first road scenario material data set to obtain a second road scenario material data set;

mapping road scenario material segmentation images in the second road scenario material data set to obtain a building scenario material data set; adding collapsed area material objects and corresponding material labels to an image of the building scenario material data set to obtain a building collapse scenario material data set;

training a second deep semantic segmentation model using the building collapse scenario material data set to obtain a basic building collapse scenario material segmentation model; and

performing domain adaptive learning on the basic building collapse scenario material segmentation model using labeled images in target scenario sequence images to obtain the trained building collapse scenario material segmentation model.

In some embodiments, performing domain adaptive learning on the basic building collapse scenario material segmentation model using labeled images in target scenario sequence images comprises:

selecting typical images from the target scenario sequence images for labeling and data enhancement to obtain a prototype image (target scenario training sample); according to the prototype image, retrieving images with similar scenario structures from the building collapse scenario material data set to form a domain migration training set;

performing fine-tuning training on the basic building collapse scenario material segmentation model using the domain migration training set to obtain an advanced model; and

iteratively executing loop steps until a preset condition is met, to obtain the trained building collapse scenario material segmentation model, the loop steps comprising:

processing the target scenario sequence images using the advanced model to obtain a labeled target scenario image;

retrieving images with similar scenario structures from the building collapse scenario material data set according to the target scenario image to obtain an updated domain migration training set; and

performing fine-tuning training on the advanced model using the updated domain migration training set to obtain an updated advanced model.

In some embodiments, the preset condition is to iteratively execute the loop steps 3 to 5 times.

In some embodiments, the first deep semantic segmentation model and the second deep semantic segmentation model are SegFormer models.

In some embodiments, the first road scenario material data set is a McubeS data set.

In some embodiments, the road scenario semantic segmentation data set is selected from at least one of a CamVid data set, a CityScape data set and a Kitti data set.

In some embodiments, mapping road scenario material segmentation images in the second road scenario material data set to obtain a building scenario material data set comprises:

for each road scenario material segmentation image in the second road scenario material data set, transforming building scenarios on both sides into front-view building scenarios by perspective projection transformation, to obtain labeled front-view building images that constitute the building scenario material data set.

In some embodiments, adding collapsed area material objects and corresponding material labels to an image of the building scenario material data set to obtain a building collapse scenario material data set comprises:

constructing a collapsed area on the image of the building scenario material data set, the collapsed area referring to parts that remain upright following a natural collapse or human demolition of a building;

using a texture data set to paste irregular texture block images on a building area where an image of a collapsed area is constructed, the texture block image comprising at least one of bricks, rubble, adobe, steel bars and window frames; and

using a COCO data set to randomly superimpose material objects on remaining parts of the building, simulating internal objects that are revealed after the collapse of external walls of the building.

In some embodiments, constructing a collapsed area on the image of the building scenario material data set comprises:

acquiring a building bounding rectangle of the image of the building scenario material data set, selecting a point from any two of left, top, and right sides of the building bounding rectangle to form a connecting line or a broken line, simulating a projection line of a cross-section on the image, and setting an area defined by the connecting line or the broken line and three sides of the building bounding rectangle to be white or sky blue to simulate a building cut in the building scenario;

alternatively, starting from an upper edge of a building image area, randomly using structural elements of different sizes and shapes to perform morphological erosion on continuous edge points of the building image area, and replacing eroded areas with an average pixel value of a surrounding area of the building.

In some embodiments, the data enhancement comprises: performing at least one of cropping, flipping, translating and brightness and color transformation on the typical image; and
adding collapsed area material objects and corresponding material labels to the typical image: obtaining images of partially collapsed buildings using truncation and erosion operations, then superimposing texture block images and material objects.

In some embodiments, retrieving images with similar scenario structures from the building collapse scenario material data set comprises:

calculating mIoU of a labeled image of the prototype image/target scenario image and a labeled image of each picture in the building collapse scenario material data set, mIoU being a mean intersection over union for each material category; and
taking the top 1% of images from the building collapse scenario material data set with maximum mIoU values as the images with similar scenario structures.

In some specific embodiments, as shown in Fig. 2, a road scenario material segmentation model is trained using the publicly available road scenario material data set McubeS (which contains only 500 training samples). Any deep semantic segmentation model can be used, with SegFormer recommended. The model is then used to process the publicly available road scenario semantic segmentation data set, and images with good material recognition results are manually selected and added to the road scenario material data set McubeS to augment it. Using homography transformation, the buildings on both sides of the road scenario material data set are transformed from a side view to a front view image. All the front view images are then combined to create a building scenario material data set. Further, each image in the building scenario data set is used as a background for buildings, on which material object images are randomly added to form a collapsed area, resulting in the building collapse scenario material data set. Using the developed building collapse scenario material data set, a deep semantic segmentation model is trained (which may resemble the road scenario material segmentation model or may be any other deep semantic segmentation model), resulting in a basic building collapse scenario material segmentation model. For the specific deployment scenario of this model, a segment of scenario video is collected first. By labeling only a few images, domain adaptation can be performed on the basic building collapse scenario material segmentation model, creating an advanced material segmentation model that is well-adapted to the specific application scenario.

The specific implementation is as follows.

1. Mapping from road scenario semantic segmentation data set to road scenario material segmentation data set

There are numerous semantic segmentation data sets available, most of which focus on road scenarios, primarily due to the popularity of the autonomous driving field in recent years, such as the CamVid, CityScape, and Kitti data sets. These data sets provide a wide variety of target categories, including roads, cars, bicycles, and buildings. This application first converts them into material data sets, thanks to some recently released road scenario material data sets that contain 500 material segmentation images along with their labels, covering 20 material categories suitable for learning road scenario material segmentation. This application utilizes the material segmentation data to train the SegFormer material segmentation model and employs a transfer learning mechanism to effectively apply it to the aforementioned road scenario semantic segmentation data set.

Analysis reveals that the recognition results of the SegFormer material segmentation model trained on general road scenarios are characterized by a small number of material category misidentifications, but more significantly, by segmentation errors. Minor material category misidentifications can be ignored or manually corrected, and the segmentation errors can be automatically rectified using the accurate semantic labels in the road scenario semantic segmentation data sets. This process allows these data sets to be transformed into road scenario material data, thereby increasing the volume of road scenario material data sets.

2. Mapping from road scenario material segmentation data set to building collapse scenario material segmentation data set

The structural layout of road scenarios primarily features a road in the center with buildings on either side, while the main structure of a building collapse scenario is oriented directly toward the building. There are some overlaps between the two, such as when turning corners or at T-junctions, where front-facing buildings are often present. Additionally, when a demolition machine works sideways, the main building is viewed from the side. However, in most cases, one is predominantly side-view while the other is front-view. Therefore, it is necessary to transform a road scenario into a building scenario, effectively converting a road scenario material data set into a building scenario material data set. The method for achieving this is to apply perspective projection transformation (homography transformation) to convert the buildings on both sides into a front view of the buildings. The perspective projection transformation is represented by a 3x3 transformation matrix:

$$\begin{bmatrix} x' \\ y' \\ 1 \end{bmatrix} = \begin{bmatrix} m_{11} & m_{12} & m_{13} \\ m_{21} & m_{22} & m_{23} \\ m_{31} & m_{32} & m_{33} \end{bmatrix} \begin{bmatrix} x \\ y \\ 1 \end{bmatrix}$$

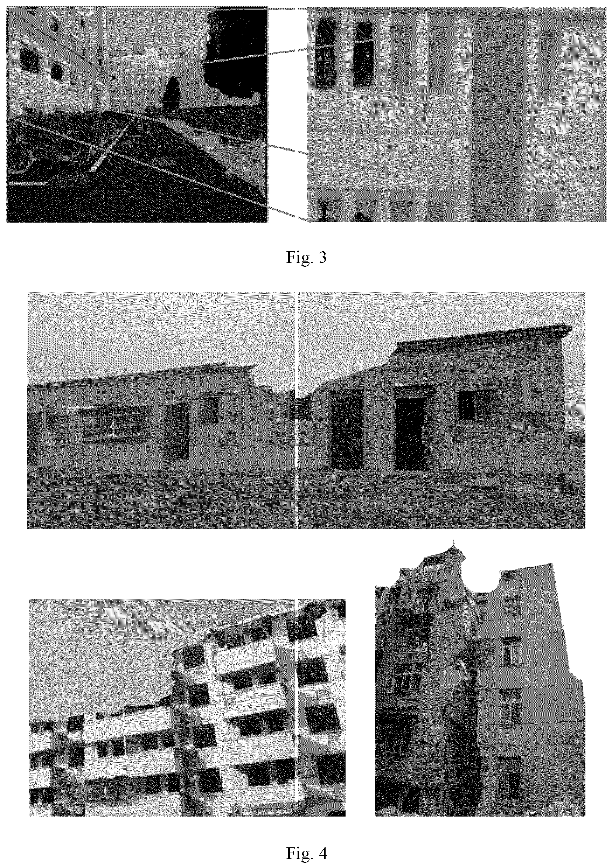

It is generally necessary to extract corresponding points from the images before and after the transformation (as indicated by the sky blue lines in Fig. 3) to obtain the parameters $m_{11} \sim m_{33}$ of the transformation matrix. However, this process is quite straightforward. Given the structure of the road scenario and the characteristics of the perspective matrix, it can be known that the buildings on both sides create a trapezoidal area that appears larger in the foreground and smaller in the background due to perspective projection, which should be a rectangular area without perspective transformation. Therefore, this application can specify an appropriate trapezoidal area and rectangular size, and by utilizing the geometric relationship between the trapezoidal area and the rectangular area, the transformation matrix can be derived to complete the inverse perspective projection transformation. This results in a front-view building image, along with the corresponding material labeled image of the front-view building image from the road scenario material labeled image.

3. Generation of collapsed area material objects and labels

Based on the building scenario material data set, a collapsed area can be constructed. The collapsed area primarily refers to parts that remain upright following a natural collapse or human demolition of a building. A building bounding rectangle is acquired first, a point is selected from any two of the left, top, and right sides of the building bounding rectangle to form a connecting line or a broken line (by selecting some midpoints through a bisection method and offsetting these midpoints vertically by a few pixels), simulating a projection line of a cross-section on the image, and an area defined by the connecting line or the broken line and three sides of the building bounding rectangle is set to be white or sky blue to simulate a building cut in the building scenario. This method is akin to removing most of the top of the building, which is somewhat simplistic. To simulate partial collapse, another approach comprises: starting from an upper edge of a building image area, randomly using structural elements of different sizes and shapes (such as circles or squares) to perform morphological erosion on continuous edge points of the building image area, and replacing eroded areas with an average pixel value of a surrounding area of the building (mostly sky area).

In addition, specific texture block images, such as bricks, rubble, adobe, steel bars and window frames, are affixed to the building to simulate the exposed bricks, concrete, and steel bars that result from deterioration. Since these textures are sourced from publicly available texture data sets, it is essential to consider gray consistency. When applying the corresponding texture block images, their gray values $g$ need to be adjusted based on their mean and contrast to obtain *g'*, ensuring that the mean $\mu_t$ and contrast $s_t$ of the texture block images match the mean $\mu_p$ and contrast $s_p$ of the area where they will be applied. The formula is as follows:

$$g' = \frac{g - \mu_p}{s_p} s_t + u_t$$

For textures like bricks, rubble and adobe, various shapes similar to those in the game Tetris (O, L, I, S, Z, J, T) can be randomly generated as mask module images M (with the background as 0 and the shape as 1), which are then element-wise multiplied with the texture block images P to form textures corresponding to the shapes indicated by the mask module. These textures are then applied to the building area. For steel bars, a cluster of curves can be generated using a Bézier curve generation method, with their gray values being darker (generally below 30). However, these gray values should not be fixed to ensure realism. Instead, gray values should be set based on a gray ratio *r* (a random number between 0.5 and 0.8) in relation to the average gray value of the building background. Let the average gray value of the local background surrounding the pixel points where the steel bars will be applied be denoted as $\overline{\mu_b}$, then the gray value $\mu_m$ of the steel bars can be calculated based on $\mu_m = r\overline{\mu_b}$.

In addition to irregular texture block images, various material objects such as wooden planks, air conditioning units, signs, and plastic curtains are overlaid on the remaining structures of the building. These material objects appear randomly and are distributed across the surfaces of the remaining structures, with the possibility of multiple material objects overlapping. This application utilizes a COCO data set for generating material objects, which is a general object recognition database containing a wide range of everyday items. Most of these material categories are relatively consistent, with only a few objects exhibiting multiple materials. Categories that have consistent material types are selected from this data set, and any inconsistent object images are manually edited out, thus obtaining a rich variety of material objects. These material objects may undergo various shape transformations and be superimposed onto the building to simulate the objects exposed after the collapse of the exterior walls of the building. Since the materials are bound to their corresponding object categories, which are known, and the COCO data set provides mask images indicating the actual pixel locations of the objects, labels for the material types of collapsed area objects when superimposing them on images of buildings may also be obtained.

4. Domain adaptive learning for building collapse scenarios

The building collapse scenario material data set obtained from the above steps (as shown in Fig. 4) can be used to train a basic material segmentation model. This application selects SegFormer as the basic material segmentation model, which is originally a semantic segmentation model. By converting its object semantic categories into the required material categories and training it with the building collapse scenario material segmentation data set, the desired material segmentation model can be obtained.

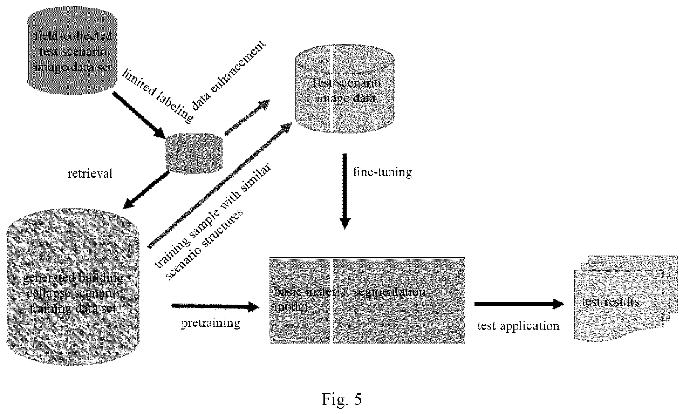

As illustrated in Fig. 5, in actual use, the model first captures a set of videos from the new scenario, requiring only a few (e.g., three) typical images from the video for labeling. By utilizing conventional data augmentation methods such as cropping, flipping, translating and brightness and color transformation, along with the sample generation method proposed in Step 3, which involves obtaining images of partially collapsed buildings through truncation and erosion operations, and overlaying them with images of objects and texture blocks, this process can be seen as a special type of data augmentation. In this way, a substantial number of training samples can be generated from these images. With the basic material segmentation model, the new scenario video sequence images collected, along with the training samples that have material labels derived from several labeled images, domain adaptive training can commence. This process consists of multiple stages, beginning with the selection of several prototype images from the training samples with material labels expanded through the aforementioned data augmentation techniques. The next stage is to search for images with similar scenario structures within all the building collapse scenario material segmentation data sets used for training the basic material segmentation model. This process is accomplished by calculating the mIoU, which is the average intersection over union for each material category, calculated using the following formula:

$$m\,IoU = \frac{1}{k+1} \sum_{i=0}^{k} \frac{p_{ii}}{\sum_{j=0}^{k} p_{ij} + \sum_{j=0}^{k} p_{ji} - p_{ii}}$$

where $p_{ij}$ indicates that category $i$ is predicted as category $j$. It is important to note that the labeled images of the prototype images are compared with the labeled images of each image in the building collapse scenario material segmentation data set to compute the mIoU, and the top 1% with maximum values are selected as images with similar scenario structures.

An initial domain transfer training set is formed from the aforementioned retrieval process, and the basic material segmentation model undergoes fine-tuning training, which involves training for a few rounds with a small learning rate. This results in an advanced model I. The new scenario video sequence images are processed using the advanced model I, and images from the building collapse scenario material data set are further selected, resulting in an updated domain transfer training set. Secondary fine-tuning is then performed, yielding an advanced model II. This process is repeated, typically for 3 to 5 cycles.

Embodiment 2: Based on Embodiment 1, this embodiment provides a material segmentation system for building collapse scenarios, comprising a memory and a processor, wherein the memory is used for storing instructions, and the instructions are used for controlling the processor to implement the material segmentation method for building collapse scenarios as described in Embodiment 1.

Embodiment 3: Based on Embodiments 1 and 2, this embodiment provides a demolition machine, comprising the material segmentation system for building collapse scenarios.

It should be understood by those skilled in the art that the embodiments of the application can be provided as methods, systems, or computer program products. Therefore, the application may take the form of an entirely hardware embodiment, an entirely software embodiment, or an embodiment combining software and hardware aspects. Further, the application may take the form of a computer program product implemented on one or more computer usable storage media (including but not limited to magnetic disk memory, CD-ROM, optical memory, etc.) having computer usable program code embodied therein.

The application is described with reference to flowcharts and/or block diagrams of the method, device (system), and computer program product according to the embodiments of the application. It should be understood that each flow and/or block in the flowcharts and/or block diagrams, and combinations of flows and/or blocks in the flowcharts and/or block diagrams, may be implemented by computer program instructions. These computer program instructions may be provided to a processor of a general purpose computer, special purpose computer, embedded processor, or other programmable data processing apparatus to produce a machine, such that the instructions executed by the processor of the computer or other programmable data processing apparatus produce a device for implementing the functions specified in one or more flows in the flowcharts and/or one or more blocks in the block diagrams.

These computer program instructions may also be stored in a computer-readable memory which can direct a computer or other programmable data processing apparatus to function in a particular manner, such that the instructions stored in the computer-readable memory produce an article of manufacture including an instruction device which implements the functions specified in one or more flows in the flowcharts and/or one or more blocks in the block diagrams.

These computer program instructions may also be loaded onto a computer or other programmable data processing apparatus such that a series of operational steps are performed on the computer or other programmable apparatus to produce a computer implemented process, and the instructions executed on the computer or other programmable apparatus provide steps for implementing the functions specified in one or more flows in the flowcharts/or one or more blocks in the block diagrams.

The above are only preferred embodiments of the invention, and it should be pointed out that for those of ordinary skill in the art, several improvements and refinements can be made without departing from the invention as defined by the appended claims and these improvements and refinements should also be considered within the protection scope of the invention.

**Claims**

1. A material segmentation method for building collapse scenarios, comprising:

   acquiring a target building collapse scenario image to be segmented; and
   inputting the target building collapse scenario image to be segmented into a trained building collapse scenario material segmentation model to obtain a material segmentation result;
   wherein the acquisition of the trained building collapse scenario material segmentation model comprises:

   training a first deep semantic segmentation model using a first road scenario material data set to obtain a road scenario material segmentation model, the first road scenario material data set comprising a plurality of road scenario material segmentation images and corresponding material labels;
   processing a road scenario semantic segmentation data set using the road scenario material segmentation model to obtain a labeled road scenario material segmentation image; adding the labeled road scenario material segmentation image into the first road scenario material data set to obtain a second road scenario material data set;

mapping road scenario material segmentation images in the second road scenario material data set to obtain a building scenario material data set; adding collapsed area material objects and corresponding material labels to an image of the building scenario material data set to obtain a building collapse scenario material data set;

training a second deep semantic segmentation model using the building collapse scenario material data set to obtain a basic building collapse scenario material segmentation model; and

performing domain adaptive learning on the basic building collapse scenario material segmentation model using labeled images in target scenario sequence images to obtain the trained building collapse scenario material segmentation model;

wherein the first deep semantic segmentation model and the second deep semantic segmentation model are SegFormer models;

and/or the first road scenario material data set is a McubeS data set;

and/or the road scenario semantic segmentation data set is selected from at least one of a CamVid data set, a CityScape data set and a Kitti data set;

and wherein mapping road scenario material segmentation images in the second road scenario material data set to obtain a building scenario material data set comprises:

for each road scenario material segmentation image in the second road scenario material data set, transforming building scenarios on both sides into front-view building scenarios by perspective projection transformation, to obtain labeled front-view building images that constitute the building scenario material data set.

2. The material segmentation method for building collapse scenarios according to claim 1, wherein performing domain adaptive learning on the basic building collapse scenario material segmentation model using labeled images in target scenario sequence images comprises:

selecting typical images from the target scenario sequence images for labeling and data enhancement to obtain a prototype image; according to the prototype image, retrieving images with similar scenario structures from the building collapse scenario material data set to form a domain migration training set;

performing fine-tuning training on the basic building collapse scenario material segmentation model using the domain migration training set to obtain an advanced model; and

iteratively executing loop steps until a preset condition is met, to obtain the trained building collapse scenario material segmentation model, the loop steps comprising:

processing the target scenario sequence images using the advanced model to obtain a labeled target scenario image;

retrieving images with similar scenario structures from the building collapse scenario material data set according to the target scenario image to obtain an updated domain migration training set; and

performing fine-tuning training on the advanced model using the updated domain migration training set to obtain an updated advanced model.

3. The material segmentation method for building collapse scenarios according to claim 2, wherein the preset condition is to iteratively execute the loop steps 3 to 5 times.

4. The material segmentation method for building collapse scenarios according to claim 1, wherein adding collapsed area material objects and corresponding material labels to an image of the building scenario material data set to obtain a building collapse scenario material data set comprises:

constructing a collapsed area on the image of the building scenario material data set, the collapsed area referring to parts that remain upright following a natural collapse or human demolition of a building;

using a texture data set to paste irregular texture block images on a building area where an image of a collapsed area is constructed, the texture block image comprising at least one of bricks, rubble, adobe, steel bars and window frames; and

using a COCO data set to randomly superimpose material objects on remaining parts of the building, simulating internal objects that are revealed after the collapse of external walls of the building.

5. The material segmentation method for building collapse scenarios according to claim 4, wherein constructing a collapsed area on the image of the building scenario material data set comprises:

acquiring a building bounding rectangle of the image of the building scenario material data set, selecting a point from any two of left, top, and right sides of the building bounding rectangle to form a connecting line or a broken line, simulating a projection line of a cross-section on the image, and setting an area defined by the connecting line or the broken line and three sides of the building bounding rectangle to be white or sky blue to simulate a building cut in the building scenario;

alternatively, starting from an upper edge of a building image area, randomly using structural elements of different sizes and shapes to perform morphological erosion on continuous edge points of the building image area, and replacing eroded areas with an average pixel value of a surrounding area of the building.

6. The material segmentation method for building collapse scenarios according to claim 2, wherein the data enhancement comprises: performing at least one of cropping, flipping, translating and brightness and color transformation on the typical image; and

adding collapsed area material objects and corresponding material labels to the typical image: obtaining images of partially collapsed buildings using truncation and erosion operations, then superimposing texture block images and material objects.

7. The material segmentation method for building collapse scenarios according to claim 2, wherein retrieving images with similar scenario structures from the building collapse scenario material data set comprises:

calculating mIoU of a labeled image of the prototype image/target scenario image and a labeled image of each picture in the building collapse scenario material data set, mIoU being a mean intersection over union for each material category; and

taking the top 1% of images from the building collapse scenario material data set with maximum mIoU values as the images with similar scenario structures.

8. A material segmentation system for building collapse scenarios, comprising a memory and a processor, wherein the memory is used for storing instructions, and the instructions are used for controlling the processor to implement the material segmentation method for building collapse scenarios according to any one of claims 1 to 7.

9. A demolition machine, comprising the material segmentation system for building collapse scenarios according to claim 8.

**Patentansprüche**

1. Ein Material-Segmentierungsverfahren für Gebäudeeinsturzszenarien, bestehend aus den folgenden Vorgängen:

Erfassung eines Bildes eines Zielgebäudeeinsturzszenarios zur Segmentierung; und
Eingabe des Zielbildes eines Gebäudeeinsturzszenarios in ein trainiertes Material-Segmentierungsmodell für Gebäudeeinsturzszenarien, um ein Material-Segmentierungsergebnis zu erhalten;
wobei die Erfassung des trainierten Material-Segmentierungsmodells für Gebäudeeinsturzszenarien Folgendes umfasst:

Trainieren eines ersten tiefen semantischen Segmentierungsmodells unter Verwendung eines ersten Datensatzes von Straßenszenarien-Materialien, um ein Segmentierungsmodell für Straßenszenarien-Materialien zu erhalten, wobei der erste Datensatz von Straßenszenarien-Materialien eine Vielzahl von Segmentierungsbildern von Straßenszenarien-Materialien und entsprechende Materialbezeichnungen umfasst;
Verarbeitung eines semantischen Segmentierungsdatensatzes für Straßenszenarien unter Verwendung des Material-Segmentierungsmodells für Straßenszenarien, um ein beschriftetes Material-Segmentierungsbild für Straßenszenarien zu erhalten; Hinzufügen des beschrifteten Material-Segmentierungsbildes für Straßenszenarien zum ersten Materialdatensatz für Straßenszenarien, um einen zweiten Materialdatensatz für Straßenszenarien zu erhalten;
Abbildung von Segmentierungsbildern von Straßenszenarien-Materialien im zweiten Straßenszenarien-Materialdatensatz, um einen Materialdatensatz für Gebäudeeinsturzszenarien zu erhalten; Hinzufügen von Materialobjekten eingestürzter Bereiche und entsprechenden Materialbezeichnungen zu einem Bild des Gebäudeszenario-Materialdatensatzes, um einen Materialdatensatz für Gebäudeeinsturzszenarien zu erhalten;

Trainieren eines zweiten tiefen semantischen Segmentierungsmodells unter Verwendung des Materialdatensatzes für Gebäudeeinsturzszenarien, um ein grundlegendes Material-Segmentierungsmodell für Gebäudeeinsturzszenarien zu erhalten; und

Durchführung domänenadaptiven Lernens auf dem grundlegenden Material-Segmentierungsmodell für Gebäudeeinsturzszenarien unter Verwendung von beschrifteten Bildern in den Zielsequenzbildern, um das trainierte Material-Segmentierungsmodell für Gebäudeeinsturzszenarien zu erhalten;

wobei das erste tiefe semantische Segmentierungsmodell und das zweite tiefe semantische Segmentierungsmodell SegFormer-Modelle sind;

und/oder der erste Datensatz für das Straßenszenario ein McubeS-Datensatz ist;

und/oder der Datensatz für die semantische Segmentierung des Straßenszenarios aus mindestens einem der folgenden Datensätze ausgewählt wird: CamVid, CityScape und Kitti.

und wobei das Mapping von Segmentierungsbildern der Straßenszenarien-Materialien im zweiten Datensatz der Straßenszenarien-Materialien zur Gewinnung eines Gebäudeszenario-Materialdatensatzes Folgendes umfasst:

Für jedes Bild der Straßenszenario-Materialsegmentierung im zweiten Straßenszenario-Materialdatensatz werden die Gebäudeszenarien auf beiden Seiten mittels perspektivischer Projektionstransformation in Frontansicht-Gebäudeszenarien umgewandelt, um beschriftete Frontansicht-Gebäudebilder zu erhalten, die den Gebäudeszenario-Materialdatensatz bilden.

2. Das Material-Segmentierungsverfahren für Gebäudeeinsturzszenarien nach Anspruch 1, wobei das domänen-adaptive Lernen des grundlegenden Material-Segmentierungsmodells für Gebäudeeinsturzszenarien unter Verwendung von beschrifteten Bildern in den Zielszenario-Sequenzbildern Folgendes umfasst:

Auswahl typischer Bilder aus den Zielszenario-Sequenzbildern zur Kennzeichnung und Datenanreicherung, um ein Prototypbild zu erhalten; Abruf von Bildern mit ähnlichen Szenario-Strukturen aus dem Materialdatensatz für Gebäudeeinsturzszenarien anhand des Prototypbildes, um einen Trainingsdatensatz für die Domänenmigration zu bilden;

Durchführung eines Feinabstimmungstrainings am grundlegenden Material-Segmentierungsmodell für Gebäudeeinsturzszenarien unter Verwendung des Domänenmigrations-Trainingsdatensatzes, um ein fortgeschrittenes Modell zu erhalten; und iterative Ausführung von Schleifenschritten, bis eine voreingestellte Bedingung erfüllt ist, um das trainierte Material-Segmentierungsmodell für Gebäudeeinsturzszenarien zu erhalten, wobei die Schleifenschritte Folgendes umfassen:

Verarbeitung der Zielszenario-Sequenzbilder mithilfe des erweiterten Modells, um ein beschriftetes Zielszenario-Bild zu erhalten;

Abrufen von Bildern mit ähnlichen Szenario-Strukturen aus dem Materialdatensatz für Gebäudeeinsturzszenarien gemäß dem Zielszenario-Bild, um einen aktualisierten Trainingsdatensatz für die Domänenmigration zu erhalten; und

Durchführung eines Feinabstimmungstrainings am fortgeschrittenen Modell unter Verwendung des aktualisierten Domänenmigrations-Trainingsdatensatzes, um ein aktualisiertes fortgeschrittenes Modell zu erhalten.

3. Das Material-Segmentierungsverfahren für Gebäudeeinsturzszenarien nach Anspruch 2, wobei die voreingestellte Bedingung darin besteht, die Schleifenschritte 3 bis 5 Mal iterativ auszuführen.

4. Das Material-Segmentierungsverfahren für Gebäudeeinsturzszenarien nach Anspruch 1, wobei das Hinzufügen von Materialobjekten aus eingestürzten Bereichen und entsprechenden Materialbezeichnungen zu einem Bild des Materialdatensatzes des Gebäudeeinsturzszenarios zum Erhalt eines Materialdatensatzes für das Gebäudeeinsturzszenario Folgendes umfasst:

Konstruktion eines eingestürzten Bereichs auf dem Bild des Gebäudeszenario-Materialdatensatzes, wobei sich der eingestürzte Bereich auf Teile bezieht, die nach einem natürlichen Einsturz oder dem Abriss eines Gebäudes durch Menschen aufrecht bleiben;

Verwendung eines Texturdatensatzes zum Einfügen unregelmäßiger Texturblockbilder auf einen Gebäudebereich, in dem ein Bild eines eingestürzten Bereichs erstellt wurde, wobei das Texturblockbild mindestens eines der folgenden Elemente umfasst: Ziegel, Schutt, Lehmziegel, Stahlstangen und Fensterrahmen; und

Simulieren interner Objekte mithilfe eines COCO-Datensatzes, um materielle Objekte zufällig auf die verbleibenden Teile des Gebäudes zu überlagern, um so interne Objekte zu simulieren, die nach dem Einsturz der Außenwände des Gebäudes sichtbar werden.

5. Das Material-Segmentierungsverfahren für Gebäudeeinsturzszenarien nach Anspruch 4, wobei das Erstellen eines eingestürzten Bereichs auf dem Bild des Materialdatensatzes des Gebäudeszenarios Folgendes umfasst:

Erfassen eines Gebäudebegrenzungsrechtecks aus dem Bild des Gebäudeszenario-Materialdatensatzes, Auswählen eines Punktes von zwei beliebigen Punkten an der linken, oberen und rechten Seite des Gebäudebegrenzungsrechtecks, um eine Verbindungslinie oder eine gestrichelte Linie zu bilden, Simulieren einer Projektionslinie eines Querschnitts auf dem Bild und Festlegen eines Bereichs, der durch die Verbindungslinie oder die gestrichelte Linie und drei Seiten des Gebäudebegrenzungsrechtecks definiert ist, auf Weiß oder Hellblau, um einen Gebäudeschnitt im Gebäudeszenario zu simulieren;
Alternativ kann man, ausgehend von der oberen Kante eines Gebäudebildbereichs, mithilfe von Strukturelementen unterschiedlicher Größe und Form eine morphologische Erosion an den kontinuierlichen Kantenpunkten des Gebäudebildbereichs durchführen und die erodierten Bereiche durch einen durchschnittlichen Pixelwert der Umgebung des Gebäudes ersetzen.

6. Das Material-Segmentierungsverfahren für Gebäudeeinsturzszenarien nach Anspruch 2, wobei die Datenverbesserung Folgendes umfasst: das Beschneiden, Spiegeln, Verschieben und die Helligkeits- und Farbtransformation des typischen Bildes; und
Hinzufügen von Materialobjekten für eingestürzte Bereiche und entsprechenden Materialbezeichnungen zum typischen Bild: Erhalten von Bildern teilweise eingestürzter Gebäude durch Abschneiden und Erosion, anschließendes Überlagern von Texturblockbildern und Materialobjekten.

7. Das Material-Segmentierungsverfahren für Gebäudeeinsturzszenarien nach Anspruch 2, wobei das Abrufen von Bildern mit ähnlichen Szenario-Strukturen aus dem Materialdatensatz des Gebäudeeinsturzszenarios Folgendes umfasst:

Berechnung der MIoU eines beschrifteten Bildes des Prototypbildes/Zielszenario-Bildes und eines beschrifteten Bildes jedes Bildes im Materialdatensatz des Gebäudeeinsturzszenarios, wobei die MIoU der mittlere Schnittpunkt über die Vereinigung für jede Materialkategorie ist; und
Auswahl der besten 1 % der Bilder aus dem Materialdatensatz für Gebäudeeinsturzszenarien mit maximalen MIoU-Werten als die Bilder mit ähnlichen Szenario-Strukturen.

8. Ein Material-Segmentierungssystem für Gebäudeeinsturzszenarien, umfassend einen Speicher und einen Prozessor, wobei der Speicher zum Speichern von Anweisungen dient und die Anweisungen dazu dienen, den Prozessor zu steuern, um das Material-Segmentierungsverfahren für Gebäudeeinsturzszenarien gemäß einem der Ansprüche 1 bis 7 zu implementieren.

9. Eine Abbruchmaschine, umfassend das Material-Segmentierungssystem für Gebäudeeinsturzszenarien gemäß Anspruch 8.

**Revendications**

1. Procédé de segmentation des matériels pour les scénarios d'effondrement de bâtiments, comprenant :

acquisition d'une image de scénario d'effondrement d'un bâtiment cible à segmenter ; et
saisie de l'image du scénario d'effondrement du bâtiment cible à segmenter dans un modèle de segmentation des matériels entraîné pour obtenir un résultat de segmentation ;
dans lequel l'acquisition du modèle de segmentation des matériels entraîné pour le scénario d'effondrement des bâtiments comprend :

l'entraînement d'un premier modèle de segmentation sémantique profonde utilisant un ensemble de données de matériel de scénario routier pour obtenir un modèle de segmentation de matériel de scénario routier, le premier ensemble de données de scénario routier comprenant une pluralité d'images de segmentation de matériel de scénario routier et d'étiquettes de matériels correspondantes ;
le traitement d'un ensemble de données de segmentation sémantique de scénario routier utilisant le modèle de segmentation des matériels de scénarios routiers pour obtenir une image de segmentation des matériels de scénario routier étiquetée ; l'ajout de l'image de segmentation du matériau du scénario routier dans le premier jeu de données du scénario routier pour obtenir un second ensemble de données du scénario routier ;

la cartographie des images de segmentation des matériels dans le deuxième ensemble de données de scénarios routiers pour obtenir un ensemble de données de matériels de scénario de construction ; l'ajout des objets matériels de la zone effondrée et des étiquettes matérielles correspondantes à une image de l'ensemble de données de scénario de bâtiment pour obtenir un ensemble de données de scénario d'effondrement ;

l'entraînement d'un second modèle de segmentation sémantique profonde utilisant le jeu de données de matériel scénario d'effondrement de bâtiment pour obtenir un modèle de segmentation de matériel de scénario d'effondrement de bâtiment de base ; et

la réalisation d'un apprentissage adaptatif de domaine sur le modèle de segmentation des matériels de scénario d'effondrement de bâtiment de base en utilisant des images étiquetées dans les images de séquence de scénarios cibles pour obtenir le modèle de segmentation des matériels de scénario d'effondrement de bâtiment entraîné ;

dans lequel le premier modèle de segmentation sémantique profonde et le second modèle de segmentation sémantique profonde sont des modèles SegFormer ;

et/ou le premier ensemble de données de matériel de scénario routier est un ensemble de données McubeS ;

et/ou l'ensemble de données de segmentation sémantique du scénario routier est sélectionné parmi au moins un jeu de données CamVid, un jeu de données CityScape et un ensemble de données Kitti ;

et dans lequel la cartographie des images de segmentation des matériels des scénarios routiers dans le deuxième ensemble de données de scénarios routiers pour obtenir un ensemble de données de scénarios de construction comprend :

pour chaque image de segmentation du matériau du scénario routier dans le second ensemble de données de scénarios routiers, la transformation des scénarios de bâtiment des deux côtés en scénarios de bâtiment en vue de face par transformation de projection en perspective, afin d'obtenir des images de bâtiment en vue de face qui constituent l'ensemble de données de matériels de scénario de construction.

2. Procédé de segmentation des matériels pour les scénarios d'effondrement de bâtiments selon la revendication 1, dans lequel l'exécution de l'apprentissage adaptatif de domaine sur le modèle de segmentation des matériels de scénario d'effondrement de bâtiment de base à l'aide d'images étiquetées dans les images de séquence de scénarios cibles, comprend :

sélectionner des images typiques à partir des images de séquence de scénario cible pour l'étiquetage et l'amélioration des données afin d'obtenir une image prototype ; selon l'image prototype, récupérer des images avec des structures de scénario similaires à partir de l'ensemble de données de matériel de scénario d'effondrement du bâtiment pour former un ensemble d'entraînement à la migration de domaine ;

effectuer une formation de réglage fin sur le modèle de segmentation de matériels de scénario d'effondrement de bâtiment de base en utilisant l'ensemble d'entraînement de migration de domaine pour obtenir un modèle avancé ; et l'exécution itérative des étapes en boucle jusqu'à ce qu'une condition prédéfinie soit remplie, pour obtenir le modèle entraîné de segmentation des matériels du scénario d'effondrement de bâtiment, les étapes en boucle comprenant :

le traitement des images de la séquence du scénario cible à l'aide du modèle avancé pour obtenir une image de scénario cible marquée ;

la récupération des images avec des structures de scénarios similaires à partir de l'ensemble de données de matériels de scénario d'effondrement de bâtiment selon l'image cible du scénario afin d'obtenir un ensemble d'entraînement de migration de domaine mis à jour ; et

la réalisation d'un entraînement de réglage fin sur le modèle avancé en utilisant l'ensemble d'entraînement de migration de domaine mis à jour pour obtenir un modèle avancé mis à jour.

3. Procédé de segmentation des matériels pour construire des scénarios d'effondrement selon la revendication 2, dans lequel la condition prédéfinie est d'exécuter itérativement les étapes en boucle 3 à 5 fois.

4. Procédé de segmentation des matériels pour les scénarios d'effondrement de bâtiments selon la revendication 1, dans lequel l'ajout des objets matériels de la zone effondrée et des étiquettes correspondantes à une image de l'ensemble de données de matériels du scénario de bâtiment pour obtenir un ensemble de données de scénario d'effondrement de bâtiment comprend :

la construction d'une zone effondrée sur l'image du jeu de données de matériels du scénario du bâtiment, la zone effondrée faisant référence aux parties qui restent debout après un effondrement naturel ou une démolition humaine d'un bâtiment ;

l'utilisation d'un jeu de données de textures pour coller des images de blocs de textures irréguliers sur une zone de bâtiment dans lequel une image d'une zone effondrée est construite, l'image du bloc de texture comprenant au moins l'un de briques, de gravats, d'adobe, de barres d'acier et de bâti de fenêtres ; et

l'utilisation d'un ensemble de données COCO pour superposer aléatoirement des objets matériels sur les parties restantes du bâtiment, simulant des objets internes révélés après l'effondrement des murs extérieurs du bâtiment.

5. Procédé de segmentation des matériels pour les scénarios d'effondrement de bâtiments selon la revendication 4, dans lequel la construction d'une zone effondrée sur l'image du jeu de données de matériels du scénario de bâtiment comprend :

acquérir un rectangle englobant le bâtiment de l'image du jeu de données de matériels du scénario de bâtiment, sélectionner un point parmi deux côtés gauche, supérieur et droit du rectangle encadrant le bâtiment pour former une ligne de liaison ou une ligne brisée, simuler une ligne de projection d'une section transversale sur l'image, et définir une zone définie par la ligne de connexion ou la ligne brisée et trois côtés du rectangle délimitant le bâtiment en blanc ou bleu ciel pour simuler une coupe de bâtiment dans le scénario du bâtiment ;

alternativement, en partant d'un bord supérieur de la zone d'image du bâtiment, utiliser aléatoirement des éléments structurels de différentes tailles et formes pour effectuer une érosion morphologique sur des points de bord continus de la zone d'image du bâtiment, et remplacer les zones érodées par une valeur moyenne en pixels d'une zone environnante du bâtiment.

6. Procédé de segmentation des matériels pour construire des scénarios d'effondrement selon la revendication 2, dans lequel l'amélioration des données comprend : effectuer au moins un recadrage, un retournement, une translation, une transformation de luminosité et de couleur sur l'image typique ; et

ajouter des objets matériels de la zone effondrée et des étiquettes matérielles correspondantes à l'image typique : obtenir des images de bâtiments partiellement effondrés à l'aide d'opérations de troncature et d'érosion, puis superposer des images de blocs de texture et des objets matériels.

7. Procédé de segmentation des matériels pour les scénarios d'effondrement de bâtiments selon la revendication 2, dans lequel la récupération d'images avec des structures de scénarios similaires à partir de l'ensemble de données de scénarios d'effondrement comprend :

le calcul de la mIoU d'une image étiquetée de l'image prototype/image du scénario cible et d'une image étiquetée de chaque image dans le jeu de données du scénario d'effondrement du bâtiment, mIoU étant une intersection moyenne sur l'union pour chaque catégorie de matériels ; et

prendre le 1 % supérieur des images issues du jeu de données de scénario d'effondrement du bâtiment avec les valeurs maximales de MIoU comme les images avec des structures de scénario similaires.

8. Système de segmentation des matériels pour construire des scénarios d'effondrement, comprenant une mémoire et un processeur, dans lequel la mémoire est utilisée pour stocker les instructions, et les instructions servent à contrôler le processeur afin de mettre en œuvre le procédé de segmentation des matériels pour construire des scénarios d'effondrement selon l'une des revendications 1 à 7.

9. Machine de démolition comprenant le système de segmentation des matériels pour les scénarios d'effondrement de bâtiments selon la revendication 8.

Fig. 1

Mapping from road scenario
semantic segmentation data set
to road scenario material data set

Mapping from road scenario
material data set to building
scenario material data set

Generation of collapsed area
material objects

Pretraining of material
segmentation model

Domain adaptive learning for
building collapse scenarios

Model prediction, output
semantic segmentation results

Fig. 2

Fig. 3

Fig. 4

Fig. 5

## REFERENCES CITED IN THE DESCRIPTION

**Non-patent literature cited in the description**

- Multimodal Material Segmentation. **LIANG YU-PENG et al.** 2022 IEEE/CVF Conference On Computer Vision And Pattern Recognition (CVPR). IEEE, 18 June 2022
- Image Augmentation To Improve Construction Resource Detection Using Generative Adversarial Networks, Cut-And-Paste, And Image Transformation Techniques. **BANG SEONGDEOK et al.** Automation In Construction. Elsevier, 24 March 2020
- **ZHANG JIAXIN et al.** Automatic generation of synthetic datasets from a city digital twin for use in the instance segmentation of building facades. *Journal of Computational Design and Engineering*, 26 August 2022